# EUROPÄISCHE PATENTSCHRIFT

(11) **EP 1 797 997 B1**
(45) Veröffentlichungstag und Bekanntmachung des Hinweises auf die Patenterteilung: **09.02.2011**
(21) Anmeldenummer: 06026315.9
(22) Anmeldetag: 19.12.2006
(51) Int. Cl.: B25B 1/10

(54) **Schraubstock mit Kraftverstärker**
Vice with force amplifier
Etau doté dýun amplificateur de tension

(30) Priorität: 19.12.2005 EP 05027739
(43) Veröffentlichungstag der Anmeldung: 20.06.2007
(73) Patentinhaber: ALLMATIC-Jakob Spannsysteme GmbH, 87647 Unterthingau (DE)
(72) Erfinder: Möst, Markus, 87490 Börwang (DE)
(74) Vertreter: Pfister, Stefan Helmut Ulrich

(56) Entgegenhaltungen:
- DE-U1- 7 830 221
- DE-U1- 8 002 852
- GB-A- 614 905
- GB-A- 2 193 126
- US-A- 2 335 743
- US-A- 5 251 887

## Beschreibung

Die Erfindung bezieht sich auf einen Schraubstock mit Kraftverstärker, wobei der Kraftverstärker eine Primärbaugruppe und eine kraftverstärkende Sekundärgruppe aufweist, wobei die Primärbaugruppe ein keilförmiges Primärelement mit mindestens einem ersten Keil und einem zweiten Keil umfaßt und jeder Keil jeweils zwei angeordnete Keilflächen aufweist und das Primärelement - wie auch die Sekundärbaugruppe - geradlinig bewegbar ist, wobei zwischen der Primärbaugruppe und der Sekundärbaugruppe ein erstes und ein zweites sich kontaktierendes Walzenpaar angeordnet ist.

Um ein Werkstück in einem Schraubstock zur Spanbearbeitung sicher und dauerhaft einzuspannen, werden Kraftverstärker eingesetzt.

Ein derartiger mechanischer Kraftverstärker wird beispielsweise im Gebrauchsmuster DE 78 30 221 U1 beschrieben. Der Kraftverstärker weist ein keilförmiges Primärglied auf, das zwischen einem ersten Paar von zwei spiegelbildlich zu einer Symmetrieebene angeordneten Rollen entlang der Symmetrieebene verschiebbar ist, und ein in gleicher Richtung verschiebbares Sekundärglied. Frei bewegliche Rollen des ersten Rollenpaars stützen sich einerseits an einer stationären Widerlagerfläche und andererseits auf einer achsparallelen frei beweglichen Rolle eines zweiten Rollenpaares ab, wobei das Rollenpaar in Richtung der Keilspitze gegenüber dem ersten Rollenpaar versetzt angeordnet ist und sich die Rollen des zweiten Rollenpaares an Gegenlagerflächen des Sekundärgliedes abstützen. Die Lagerflächen des Rollenpaares schließen mit der Symmetrieebene einen Neigungswinkel ein, der kleiner ist als 90°.

Zur Zentrierung des zweiten Rollenpaares in Ausgangsstellung spiegelbildlich zur Symmetrieebene sind angeordnete Zentrierflächen zwischen den Rollen und diesem zweiten Rollenpaar vorgesehen. Die sich berührenden Rollen und ihre Lagerflächen werden durch eine auf das Sekundärglied einwirkende Federanordnung in ständiger Anlage gehalten. Die Rollendurchmesser, die Neigungswinkel der Lagerflächen und der Keilwinkel des Primärgliedes sind so gewählt, daß in allen Betriebsstellungen des Kraftverstärkers die Achsen zweier sich berührender Rollen stets auf der der Symmetrieebene zugekehrten Seite der Verbindungslinie zwischen den Berührungslinien dieser Rollen mit ihren Lagerflächen liegen. Derartige Kraftverstärker haben an ihren kontaktierenden Flächen erhebliche Reibanteile und sind deshalb für hohen Kräfte schwergängig beziehungsweise nicht geeignet. Es tritt ein sogenanntes Wälzgleiten auf, bedingt durch die unterschiedlichen Winkel an der stationären Widerlagerfläche und der Lagerfläche.

Der nächstliegende Stand der Technik, die GB 614 905, beschreibt einen Kraftverstärker mit einer stabförmigen Nocke mit zwei kegelförmigen Abschnitten, die mit einem zylindrischen Abschnitt verbunden sind. Zwei Reaktionswalzenpaare kontaktieren die Nocke, wobei immer ein Walzenpaar in dem zylindrischen Abschnitt wirkt.

Es sind zudem Kraftverstärker mit einer ausgeprägteren Abwälzbewegung im Kraftaufbau bekannt. Diese haben zwar geringere Reibanteile und benötigen deshalb relativ kleinere Bedienkräfte, sie sind aber sehr anfällig für Brüche und Ausfälle bei hohen Belastungen und deshalb weniger geeignet, da insbesondere Kugeln zwischen den Stützgliedern beziehungsweise Führungsblechen für die Rollenkörper eingesetzt werden.

Der vorliegenden Erfindung liegt die Aufgabe zugrunde, einen Schraubstock mit einem Kraftverstärker der eingangs genannten Art zu schaffen, der die Nachteile des Standes der Technik durch eine verbesserte Ausführung mit einer größtmöglichen Vermeidung von Reibanteilen an den Walzen überwindet.

Diese Aufgabe wird dadurch gelöst, daß jeder Walze des mindestens einen ersten und zweiten Walzenpaares genau eine ständig kontaktierende Keilfläche zugeordnet ist.

Ein wesentlicher Vorteil der Erfindung liegt darin, daß jeder Walze genau eine Keilfläche des Primärelementes zugeordnet ist. Somit werden die vier Walzen der zwei Walzenpaare exakt den vier Keilflächen, wobei sich jeweils zwei Keilflächen auf jeder Seite des Primärelementes befinden, zugeordnet. Die Anordnung ist dabei so geschickt gewählt, daß eine andauernd abwälzende oder abrollende Bewegung realisiert ist, die dadurch erreicht wird, daß die Keilflächen jeweils nur einer Walze und nicht, wie nach dem Stand der Technik, zwei Walzen zugeordnet werden. Dies erlaubt es, daß die Keilfläche in dem verhältnismäßig komplizierten, geometrischen Modell exakt so ausformbar ist, um die gewünschte Kraftverstärkung einerseits und die gewünschte Abrollbewegung andererseits sicherzustellen. Die Lösungen nach dem Stand der Technik vermögen dies, insbesondere bei hohen Kräften nicht mehr zu gewährleisten, die Doppelverwendung von Keilflächen schließt eine entsprechende Optimierung der jeweiligen Keilfläche auf die Abrollbewegung einer Walze aus. Hieraus resultiert, daß diese Walzen, statt eine Abrollbewegung zu vollführen, zu gleiten, also zu rutschen beginnen, was bei hohen Kräften, die über den Kraftverstärker umzusetzen sind, unvermeidlich zu einem Verklemmen führt. Reibanteile an den Walzen sind somit minimiert klein. Es wird eine kräftemäßig stabile Kinematik erzielt, die zu einer reinen Abwälzbewegung im Hochlastbereich führt. Die Auslegung (Keilflächen und/oder Keilwinkel) der zwei Keile führt zu einer größeren Variabilität in der Dimensionierung und Auslegung des Kraftverstärkers bei gleichzeitig relativ niedrigen Bedienkräften.

Bevorzugt ist das keilförmige Primärelement als Doppelkeil mit einem ersten Keil und einem direkt dahinter angeordnetem zweiten Keil ausgebildet. Dabei ist der erste Keil am vorderen Ende des Primärelementes angeordnet. Dem ersten Keil ist das erste Walzenpaar und dem zweiten Keil ist das zweite Walzenpaar zugeordnet und jede Keilfläche wirkt auf die zugehörige Walze. Somit wird eine kompakte Bauweise erzielt, die einen sehr wirkungsvollen Kraftverstärker mit einem geringen Hub realisiert.

Günstigerweise ist vorgesehen, daß der erste Keil am vorderen Ende des Primärelemtens angeordnet ist. Das Primärelement ist in der Wirkrichtung in Richtung zu der Sekundärbaugruppe hin bewegbar. Der erste Keil ist der Sekundärbaugruppe zugewandt und wirkt mit dem ersten Walzenpaar, welches an der Sekundärgruppe anliegt, zusammen.

Vorzugsweise befindet sich im nicht aktiven Zustand des Kraftverstärkers das zweite, die Primärbaugruppe kontaktierende Walzenpaar sich im Eingriff des zweiten Keils. Somit ist der Doppelkeil sicher im nicht aktiven Zustand eingespannt und läßt nur den Hub zum aktiven kraftverstärkten Zustand zu.

Bei Bewegung des Primärelementes in Richtung der Keilspitzen sind das erste Walzenpaar und das zweite Walzenpaar an sich im Wesentlichen spiegelbildlich auftretenden, gemeinsamen, fortbewegenden Kontaktpunkten aufeinander abwälzbar. Somit wird eine reine Abwälzbewegung im Hochlastbereich ausgeführt.

Um eine harmonische abwälzende Bewegung zwischen den hintereinander liegenden Walzenpaaren, insbesondere am zweiten Walzenpaar zu erzeugen, beträgt das Verhältnis eines ersten Primärkeilwinkels (α) zwischen einer Symmetrieachse und einer Keilfläche des ersten Keils zum zweiten Primärkeilwinkel (β) zwischen der Symmetrieachse und einer Keilfläche des zweiten Keils ungefähr 4/1 bis 4/3, bevorzugt ca. 2/1, besonders bevorzugt 3/2.

Um eine möglichst schlanke Ausführung des keilförmigen Primärelements, das heißt des Keilbolzens zu erreichen, ist der erste Keil des Primärelements mit einem ersten Primärkeilwinkel (α) zur Symmetrieachse zwischen etwa 10° bis 45°, bevorzugt zwischen etwa 15° bis 25°, besonders bevorzugt ca. 20°, ausgebildet.

Günstigerweise ist der zweite Keil des Primärelementes mit einem zweiten Primärkeilwinkel (β) zwischen etwa 5° bis 35°, bevorzugt zwischen 10° bis 15°, besonders bevorzugt ca. 12°, ausgebildet.

Um möglichst hohe Lasten und Kräfte übertragen zu können, ist das keilförmige Primärelement zu einer Symmetrieebene, die auf der Symmetrieachse liegt und zu der der Kraftverstärker einschließlich der zwei kontaktierenden Walzenpaare (6a, 6b, 7a, 7b) spiegelbildlich angeordnet ist, flächig ausgebildet.

Bei einer alternativen Ausführungsform kann das (in einer Seitenansicht gesehene) keilförmige Primärelement rotationssymmetrisch ausgebildet sein, um die Kontaktflächen zu den Walzenpaaren möglichst zu minimieren und somit äußerst geringe Reibung, vor allem beim ersten Keil, zu erzeugen.

Vorzugsweise ist der Profilübergang vom zweiten Keil des Primärelementes zum Keilprofil des ersten Keils des keilförmigen Primärelementes mit einem Radius ausgebildet, der im wesentlichen dem Radius einer Walze des zweiten, anliegenden Walzenpaares (6a, 6b) entspricht. Somit wird es ermöglicht, im Bedarfsfall den Primärkeil aus der Walzenanordnung zu ziehen.

Bei Bewegung des Primärelements in Richtung der Keilspitzen sind die Walzen an sich entgegen der Spitzenrichtung verändernden Kontaktpunkten auf den Keilflächen des zweiten Keils zumindest teilweise abwälzbar. Das zweite Walzenpaar wird somit zu einer Abwälzbewegung veranlaßt. Ein Gleiten, das eine Reibung verursacht, wird soweit wie möglich vermieden. Soweit ein Gleiten erfolgt, erfolgt dieses nicht auf den Flächen, die hohe Kräfte übertragen, also zwischen den Walzen und der Widerlagerfläche, den Walzen und den Gegenlagerflächen sowie unter den Walzen der Walzenpaare selber, sondern gegebenenfalls nur zwischen dem doppelkeilförmigen Primärelement und den Walzen, wo deutlich geringere Kräfte auftreten.

Um eine kraftverstärkende Wirkung zu dimensionieren und möglichst den gegebenen Anforderungen zu optimieren, ist eine zur Sekundärbaugruppe gehörende Gegenlagerfläche, die von dem ersten Walzenlagerpaar kontaktiert wird, mit einem Gegenlagerwinkel (δ) zwischen ca. 0° bis 20° zu einer Ebene senkrecht zur Symmetrieachse nach außen symmetrisch zu einer Symmetrieebene ausgebildet. Bevorzugt erstreckt sich eine geneigte Gegenlagerfläche jeweils ungefähr von der auf die Gegenlagerfläche projezierten Rotationsachse der jeweiligen Walze des ersten Walzenpaares beginnend, so daß sich eine - im Querschnitt gesehen - konkave Gegenlagerfläche ergibt. Des weiteren sieht die Erfindung vor, daß die Gegenlagerfläche alternativ in sich eben, das heißt nicht gebogen (sei es konkav oder auch konvex) ausgebildet ist. Diese so definierte Ebene steht rechtwinklig zur Symmetrieachse (δ = 0) oder ist hierzu geneigt.

Aufgrund der Abwälzbewegung im Hochlastbereich der Walzen zueinander, sind bei Bewegung des Primärelements in Richtung der Keilspitzen die Walzen auf der Gegenlagerfläche spiegelbildlich an sich verschiebenden Kontaktpunkten abwälzbar.

Die Bewegung des Primärelements in Richtung der Keilspitzen führt dazu, daß die Walzen des zweiten Walzenpaares auf der Widerlagerfläche an sich spiegelbildlich auseinandergehenden Kontaktpunkten abwälzbar sind.

Vorteilhafterweise bildet eine zur Primärbaugruppe gehörende, zur Symmetrieachse geneigte Widerlagerfläche, die das zweite Walzenlagerpaar kontaktiert, einen Widerlagerwinkel (τ) zum Lot der Symmetrieachse zwischen ungefähr 15° bis 45°, bevorzugt ca 30°, aus. Somit ergibt sich eine weitere Einstell- und Dimensionierungsmöglichkeit des erfindungsgemäßen Kraftverstärkers.

Um die Walzenlagerpaare möglichst gleichmäßig zu belasten und die Fertigungskosten zu senken, werden identische Walzenlager verwendet, so daß die Walzenlagerpaare jeweils gleiche Durchmesser aufweisen. Ein Vorteil der Erfindung liegt auch darin, daß bevorzugt die Walzen identisch, also mit gleichem Durchmesser eingesetzt werden, um keine Schwachpunkte zu bilden. Die Erfindung umschließt natürlich dabei auch Ausgestaltungen, die annähernd gleiche Durchmesser der Walzen mit einschließen.

Um große Kräfte aufnehmen bzw. übertragen zu können, die einer hohen Last ausgesetzt sein können, ist das Verhältnis zwischen dem Durchmesser D eines Walzenlagers und dem Radius eines zylindrischen Widerlagers der Primärbaugruppe bzw. des Gegenlagers der Sekundärbaugruppe ca. 2/3 bis 4/5, bevorzugt ca. 3/4.

Günstigerweise weist die Widerlagerfläche der Primärbaugruppe - im Querschnitt gesehen - zwei gegensinnig gebogene Abschnitte auf, wobei die zweite Widerlagerfläche zur Symmetrieachse spiegelbildlich davon ausgebildet ist. Im Querschnitt gesehen ergibt sich dann eine leicht S-förmige Ausgestaltung. Somit ergibt sich eine Widerlagerfläche, die die Wirkung des Kraftverstärkers bei Bewegung des Primärelements vorteilhaft verstärkt.

Die Oberflächen der Walzenpaare sind, vorzugsweise mit Öl, gefettet, wobei vorzugsweise der Kraftverstärker mit einer Füllmenge von circa 20 bis 60 Volumenprozent, besonders bevorzugt circa 40 Volumenprozent, mit einer fettenden Spezifikation gefüllt ist. Dadurch ist für eine ausreichende Schmierung gesorgt, die die Reibungskräfte auf ein Minimum reduziert.

Damit die Walzenlagerpaare in einer Ebene zwangsgeführt werden, ist das erste, die Sekundärbaugruppe kontaktierende Walzenlagerpaar in einem Käfig geführt, insbesondere ist das zweite, die Primärbaugruppe kontaktierende Walzenlagerpaar zumindest teilweise vom Käfig geführt.

Alternativ können auch zwei parallele seitliche Führungsbegrenzungen zur Führung und Lagerung der Walzenpaare, insbesondere in jeweils einer Linearführung gelagert, angeordnet sein. Dies ist eine preiswerte und sehr funktionale Lösung.

Zur Verbesserung der kraftverstärkenden Wirkung können die Keilflächen des ersten Keils jeweils nach außen konvex gekrümmt sein, insbesondere können auch die Keilflächen des zweiten Keils des Primärelements nach außen konvex gekrümmt sein. Die Keilflächen können auch ellipsenförmig oder konkav gekrümmt sein, insbesondere auch die Keilflächen des zweiten Keils des Primärelements. Die Erfindung sieht weiterhin vor, daß die Keilflächen des ersten Keils und des zweiten Keils jeweils nach außen als Kurven ausgebildet sind. Neben diesen gebogenen Varianten besteht natürlich auch die Möglichkeit, daß die Keilflächen als Kreisbogen, als Ellipse, als Kurve, konvex oder sonst gekrümmt ausgeführt sind oder aus unterschiedlichen Teilfächen bestehen. Die Keilflächen sind vorteilhafterweise jeweils symmetrisch am Primärelement angeordnet.

Um die kontaktierenden Punkte auf ein Minimum zu reduzieren, können alternativ die Walzlagerpaare als Kugelpaare ausgebildet sein. Erfindungsgemäß haben die Walzlagerpaare die Aufgabe, aufeinander eine Abwälzbewegung auszuführen. Dies kann durch Kugelpaare -wie beschrieben - erfolgen, oder hier können auch Zylinderpaare eingesetzt werden, wodurch sich dann nicht eine punktweise Auflage, sondern eine Linienauflage ergibt. Erfindungsgemäß umfaßt der Begriff Walzlagerpaare sowohl Kugelpaare wie auch Zylinderpaare.

Alternativ, auch zur Erfindung gehörend, wird vorgeschlagen, daß die Keilflächen zumindest eines Keiles nicht gekrümmt, sondern eben ausgebildet ist. Hierdurch erhöht sich der Schatz an Realisierungsmöglichkeiten und die Variabilität der Erfindung steigt entsprechend. Auch ist vorgesehen, eine gebogene, gekrümmte Keilfläche eines Keiles mit einer ungebogenen, ebenen Keilfläche des anderen Keiles zu kombinieren.

Der Vorteil der Erfindung liegt insbesondere in seiner großen Spanne von Realisierungsmöglichkeiten. Es können Kraftverstärker mit geringer oder hoher Kraftverstärkung mit geringem oder hohem Hub realisiert werden. Dies wird insbesondere durch eine entsprechende Kombination der Parameter erster (α) und zweiter (β) Primärkeilwinkel sowie der Ausgestaltung der Gegenlagerfläche beziehungsweise Widerlagerfläche (eben, gebogen), Gegenlagerwinkel (δ) und Widerlagerwinkel (τ) erreicht.

Ein weiterer Vorteil der Erfindung liegt darin, daß die Gegenlagerflächen, wie auch die Widerlagerflächen gekrümmt, elliptisch, konvex oder als Kreisbogen beziehungsweise aus Abschnitten unterschiedlicher Ausgestaltung ausgebildet sind. Bei dieser erfindungsgemäßen Variante wird deutlich, daß durch die Gestaltung der Gegenlagerflächen, wie auch durch die Gestaltung der Keilflächen, die Chrakteristik des Kraftverstärkers in weiten Bereichen einstellbar ist und auf die entsprechenden Anwendungsfälle adaptierbar ist. Die Erfindung begrenzt sich dabei nicht dahingehend, daß die Gegenlagerfläche, die Widerlagerfläche oder die Keilfläche nur mit einer einheitlich gebildeten Fläche realisiert ist, sie umfaßt ausdrücklich auch Ausgestaltungen, die eine unterschiedliche Kombination der verschiedenen Flächentypen, also zum Beispiel verschieden geneigte Flächen, verschieden konvex gebogene oder elliptisch ausgebildete oder aneinandergesetzte Kreisbogensegmente und so weiter umfaßt. Es ist auch möglich, entsprechend gekrümmte Flächen mit ebenen Flächen und so weiter zu kombinieren.

Die Erfindung erfaßt selbstverständlich auch einen Kraftverstärker, der nicht im Zusammenhang mit dem offenbarten Schraubstock zu sehen ist, der aber sämtliche vorher aufgezeigten Merkmale, wie sie im Zusammenhang mit dem Schraubstock dargelegt worden sind, umfaßt.

Es versteht sich, daß die vorstehend genannten und nachstehend noch zu erläuternden Merkmale nicht nur in der jeweiligen angegebenen Kombination, sondern auch in anderen Kombinationen verwendbar sind. Die Erfindung wird im folgenden anhand zweier Ausführungsbeispiele unter Bezugnahme auf fünf zugehörige Zeichnungen näher erläutert.

Es zeigen:
- Fig. 1:: einen Querschnitt eines Kraftverstärkers gemäß der Erfindung;
- Fig. 2:: einen Querschnitt eines Kraftverstärkers mit den wesentlichen Abwälzpunkten gemäß der Erfindung,
- Fig. 3:: einen Querschnitt des Kraftverstärkers mit den wesentlichen Winkeln zum Dimensionieren des Kraftverstärkers gemäß der Erfindung,
- Fig. 4:: einen Kraftverstärker im Querschnitt im eingebauten Zustand gemäß einer ersten Ausführungsform gemäß der Erfindung und
- Fig. 5:: einen Kraftverstärker in einer weiteren Ausführungsform der Erfindung.

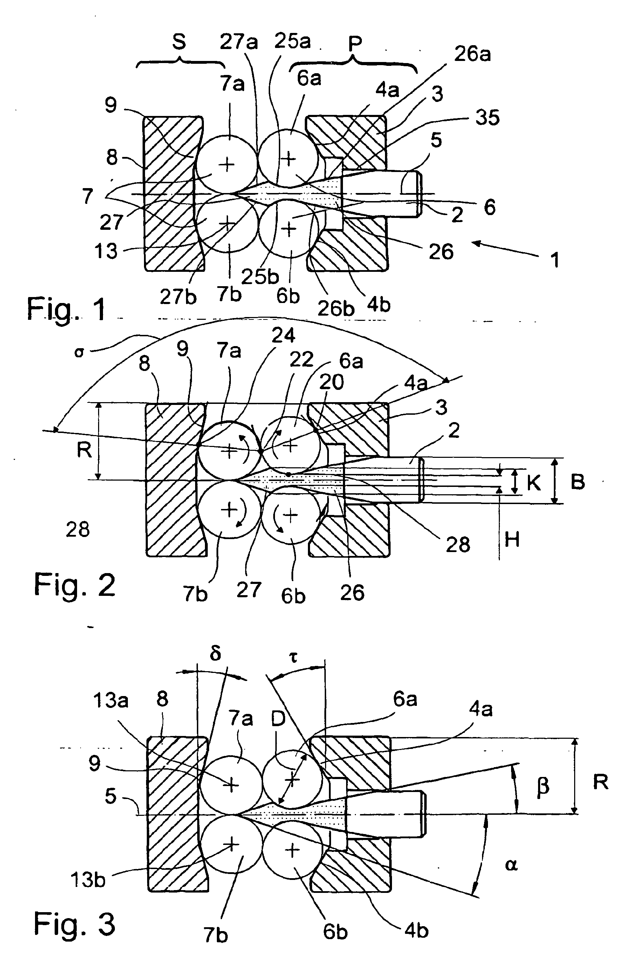

Die Fig. 1 zeigt die wesentlichen Bauteile für den erfindungsgemäßen Kraftverstärker 1. Eine Primärbaugruppe P umfaßt ein keilförmiges Primärelement 2 und ein Widerlager 3, das eine zentrierte Bohrung 35 aufweist, in dem das Primärelement 2 geführt ist.

Eine Sekundärbaugruppe S umfaßt ein zylindrisches Gegenlager 8. Das Primärelement 2 ist erfindungsgemäß als keilförmiger Bolzen mit einem Doppelkeil ausgebildet. Der Doppelkeil weist einen ersten Keil 26, mit zu einer Symmetrieachse spiegelbildlich angeordnten Keilflächen 27a, 27b und einen dahinter angeordneten zweiten Keil 27, mit Keilflächen 26a, 26b auf. Dem ersten Keil 26 ist ein erstes Walzenpaar 7 zugeordnet, das zu einer Symmetrieachse 5, die gleichzeitig in einer Symmetrieebene liegt, spiegelbildlich angeordnet ist. Dem zweiten Keil 27 ist ein zweites Walzenpaar 6 zugeordnet.

Im nicht aktiven Zustand des Kraftverstärkers 1 befindet sich das zweite, zur Primärbaugruppe P nächstliegende Walzenpaar 6 im Eingriff des zweiten Keils 27. Die sich kontaktierenden ersten und zweiten Walzenpaare 6, 7 sind zwischen dem Widerlager 3 der Primärbaugruppe P und dem Gegenlager 8 der Sekundärbaugruppe S angeordnet. Jeder Walze 6a, 6b, 7a, 7b des ersten und zweiten Walzenpaares 6, 7 ist genau eine ständig kontaktierende Keilfläche 26a, 26b, 27a, 27b zugeordnet. Somit wirkt jede Keilfläche 26a, 26b, 27a, 27b auf die zugehörige Walze. Ein Profilübergang 25a, 25b von den ersten Keilflächen 27a, 27b zu den zweiten Keilflächen 26a, 26b weist im Wesentlichen den gleichen konkaven Radius wie die zweiten, im entspannten Zustand anliegenden Walzen 6a, 6b auf.

Das Widerlager 3 ist als breiter Ring bzw. als Zylinder ausgebildet, der auf der dem Kraftverstärker 1 abgewandten Seite eine plane Stirnfläche aufweist und auf der gegenüberliegenden Seite Widerlagerflächen 4a, 4b ausbildet. Im Querschnitt gesehen, ist die eine Widerlagerfläche 4a als eine leicht S-förmige Profilfläche ausgebildet, während die gegenüberliegende Widerlagerfläche 4b zur Symmetrieachse 5 eine spiegelbildliche Profilform aufweist.

Um das Primärelement 2, das auch als Keilbolzen bezeichnet werden kann, in einer schlanken Bauweise auszuführen, weist der Keilbolzen folgende Verhältnisse auf:

Der maximale Keildurchmesser K des ersten Keils 26 zum Durchmesser B des Keilbolzens beziehungsweise Primärelements 2 weist ein Verhältnis auf von ungefähr 7/17, und der am meisten verjüngte Übergang vom ersten Keil 26 zum zweiten Keil 27, der als Ansatz beziehungsweise auch als Hals bezeichnet werden könnte, weist einen Durchmesser H im Verhältnis zum Durchmesser B des Primärelements 2 von 3/17 auf.

Die Walzen 6a, 7a wälzen sich, gemäß Fig. 2, bei Bewegung des Primärelements 2 in Richtung der Keilspitzen im Kontaktpunkt 22 aufeinander ab. Die Walze 7a wälzt sich dabei gleichzeitig beim Auseinandertreiben der Walzen 7a und 7b auf der Gegenlagerfläche 9 des Gegenlagers 8 nach außen hin im sich verschiebenden Kontaktpunkt 24 ab. Gleichzeitig bewegt sich die Walze 6a des zweiten Walzenpaares 6 durch Abrollen auf der Widerlagerfläche 4a des Widerlagers 3 auf dem sich veränderden Kontaktpunkt 20, während die Walze 6a auf der Keilfläche 26a des zweiten Keils 27 am Kontaktpunkt 28 abläuft. Die symmetrisch angeordneten Walzen 7b und 6b bewegen sich spiegelbildlich.

Eine erste Verbindungslinie, die den Kontaktpunkt 22 und den Kontaktpunkt 24 beinhaltet, und eine zweite Verbindungslinie, die den Kontaktpunkt 22 und den Kontaktpunkt 20 beinhaltet, schneiden einander in einem stumpfen Winkel σ (zwischen 90° und 180°). Dabei liegen die Mittelpunkte der Walzenlagerpaare 6, 7 nicht auf den jeweiligen Verbindungslinien. Durch diese Ausgestaltung resultiert eine stabile definierte Lage und eine reine Abwälzbewegung im Hochlastbereich der Kontaktpunkte 20, 22, 24. Des weiteren ist die Anordnung so gewählt, daß die Verbindungsgeraden der Mittelpunkte der jeweiligen Walzenlagerpaare 6, 7 zu den jeweiligen Kontaktpunkten 24 und 20 mit der Mittelpunktverbindungslinie der beiden Walzenlager 6, 7, die auch den Kontaktpunkt 22 beinhaltet, ebenfalls einen stumpfen Winkel einschließt. Die Anordnung ist dabei so gewählt, daß die Verbindungsgerade von den jeweiligen Mittelpunkten hin zu den jeweiligen Kontaktpunkten 20, 24 von der Symmetrieachse 5 weggeneigt ist.

Die Fig. 3 zeigt die wesentlichen Winkel eines Kraftverstärkers 1, die je nach Anforderungsfall und Belastungsfall verändert dimensioniert werden können, um den Kraftverstärker 1 den Vorgaben entsprechend auszulegen. Sie ermöglichen somit eine erhöhte Variabilität gegenüber Kraftverstärkern 1 gemäß dem Stand der Technik. Die ersten und zweiten Primärwinkel α und β befinden sich am doppelkeilförmigen Primärelement 2. Der erste Primärwinkel α des ersten Keils 26 von einer Keilfläche zur Symmetrieachse 5 beträgt 20°. Der zweite Primärwinkel des zweiten abgesetzten Keils 27 beträgt von einer Keilfläche zur Symmetrieachse 5 ca. 12°.

Die Widerlagerfläche 4a, 4b des Widerlagers 3 sind zur Symmetrieachse 5 nach innen jeweils mit einem Winkel δ von ungefähr 30° Grad zum Lot zur Symmetrieachse 5 beziehungsweise zur parallelen Ebene der Stirnfläche des Widerlagers 3 geneigt.

Das Gegenlager 8 ist mit ungefähr dem gleichen Radius wie das Widerlager 3 ausgebildet.

Das Gegenlager 8 ist zylindrisch ausgebildet und weist eine zur Symmetrieachse 5 spiegelbildlich angeordnete Gegenlagerfläche auf, die von dem auch spiegelbildlich angeordneten ersten Walzenlagerpaar 7 kontaktiert wird. Die Gegenlagerfläche bildet einen Gegenlagerwinkel δ mit ca. 10° zu einer Ebene senkrecht zur Symmetrieachse nach außen hin aus. Die Gegenlagerfläche ist in einem Zentrumsbereich um die Symmetrieachse 5 plan, das heißt senkrecht zur Symmetrieachse ausgebildet. Die Gegenlagerfläche 9 erstreckt sich mit dem oben angegebenen Winkel beginnend jeweils ungefähr von der auf die Gegenlagerfläche 9 projezierten Rotationsachse 13a, 13b der Walze 7a, 7b des ersten Walzenpaares 7. Die Gegenlagerfläche ist somit - im Querschnitt gesehen - konkav.

Die Walzenpaare 6, 7 sind mit jeweils gleichen Durchmessern D ausgbildet. Der Durchmesser D zum Radius R des zylindrischen Gegenlagers 8 ist im Verhältnis von ungefähr 3/4. Somit wird eine insgesamt schlanke Bauform des keilförmigen Primärelements 2 und vom gesamten Kraftverstärker 1 geschaffen.

Nach einer alternativen Ausführungsform ist das keilförmige Primärelement 2 rotationssymmetrisch ausgebildet, das heißt, die Keilspitze ist kegelförmig ausgebildet. Somit sind die Reibungsflächen der Kontaktpunkte mit den Walzen 6a, 6b, 7a, 7b reduziert, so daß ein geringer Widerstand bei Drucklast auftritt.

Bei einem flachen kegelförmigen oder keilförmigen Primärelement 2, wie in den Fig. 1 bis 5 dargestellt, können auch statt Walzenelementen Kugelpaare eingesetzt werden. Kugelpaare haben den Vorteil, daß eine Reibung zwischen den einzelnen Keilflächen des ersten Keils 26 und des zweiten Keils 27 auf ein Minimum, nämlich auf einen Kontaktpunkt reduziert wird, sowohl auf der Gegenlagerfläche 9, als auch auf der Widerlagerfläche 4a, 4b der Primärbaugruppe P beziehungweise der Sekundärbaugruppe S.

Die Gegenlagerfläche 9 kann nach außen leicht gekrümmt, also konvex ausgebildet sein. Damit wird die Kraftverstärkungswirkung verbessert, wenn der Doppelkeil, also das heißt das Primärelement 2, in Richtung der Keilspitze bewegt wird und das Walzenpaar 7 auseinander getrieben wird und sich somit der Abstand zwischen der Primärbaugruppe P und der Sekundärbaugruppe S vergrößert.

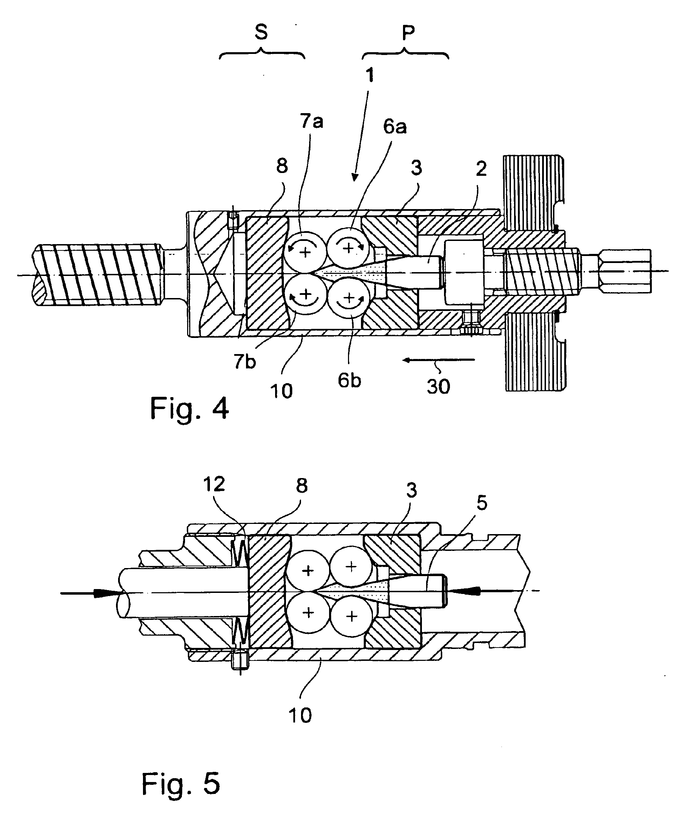

Die Fig. 4 zeigt den Kraftverstärker 1 im eingebauten Zustand. Das Gegenlager 8 ist in diesem Fall als feststehendes Lager ausgebildet, das durch eine nicht gezeigte Feder vorgespannt sein kann. Das Widerlager 3 bewegt sich aus einer zylindrischen Röhre 10, wenn der Doppelkeil des Primärelements 2 das Walzenpaar 7, das die Sekundärbaugruppe S kontaktiert, eingreift und beide Walzenpaare 6, 7 spiegelbildlich auseinander treibt, so daß der Abstand der Primärbaugruppe P und der Sekundärbaugruppe S aufgrund der nach innen zur Symmetrieachse 5 geneigten Flächen 4a, 4b, 9 sich vergrößert. Die Walzen 6a, 6b bewegen sich hierbei wie ein Scharnier nach außen, wobei sie gleichzeitig auf der Widerlagerfläche 4a und 4b und auf der Gegenlagerfläche 9 sich abwälzen. Das zweite Walzenlagerpaar 6 wälzt sich auf den Flächen des zweiten Keils 26 ab. Das erste Walzenlagerpaar 7 wird durch den ersten Keil 27 auseinander getrieben. Der Vorschub 30 des Primärelemtes 2 führt zu dem mit Rotationspfeilen angedeuteten Abwälzbewegungen der Walzenlagerpaare 6, 7. Der Vorschub 30 resultiert aus einer Kurbelbewegung an dem an der rechten Seite angeordneten Kurbelansatz. Der in einem Gewinde gehaltene Kurbelansatz wirkt auf ein Übersetzerstück das entsprechend der Kurbebewegung (entsprechend Pfeil 30) vor- und zurückgesetzt (zum Beispiel federunterstützt) wird.

Die Fig. 5 zeigt den Kraftverstärker in einer zweiten alternativen Ausführungsform, wobei hier im Gegensatz zur Fig. 4 das Widerlager 3 als feststehendes Lager ausgebildet ist und das Gegenlager 8 mittels Federn 12 vorgespannt ist. Die Kräfte sind hier mittels Pfeilen eingezeichnet, die auf der Symmetrieachse 5 liegen und von zwei Seiten, einmal der Primärbaugruppe P und der Sekundärbaugruppe S, angreifen.

Damit die Walzenpaare 6, 7 leicht und möglichst verschleißfrei laufen, sind sie eingefettet, wobei das Volumen mit einer fettenden Spezifikation mit bis zu 40% gefüllt ist.

Die Walzen werden mit zwei (nicht gezeigten) parallelen Führungsbegrenzungen beziehungsweise Führungsteilen geführt, so daß eine Rotation und eine definierte Bewegung der Walzen 6a, 6b, 7a, 7b in einer Ebene möglich ist. Diese (nicht gezeigten) Führungsteile können mittels Linearführungen zwischen dem Widerlager 3 und dem Gegenlager 8 befestigt sein.

Diese Bauform ermöglicht eine kräftemäßig stabile Kinematik mit einer reinen Abwälzbewegung im Hoch-Last-Bereich, wobei trotz verhältnismäßig großen Walzen bzw. Rollen eine schlanke Bauform erreicht wird. Wichtig für die Auslegung der Keilflächen 26a, 26b, 27a, 27b des ersten und zweiten Keils 26, 27 ist, daß diese in einem bestimmten Winkelverhältnis zueinander stehen, wobei das Winkelverhältnis mit der Wälzbewegung des Rollenkörpers harmoniert, weil die Keilfächen 26a, 26b, 27a, 27b direkt und ständig auf eine zugeordnete Walze 6a, 6b, 7a, 7b wirken. Insbesondere wird auf die zeichnerischen Darstellungen aller Figuren als wesentlich verwiesen.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik, beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Schraubstock mit Kraftverstärker (1), wobei der Kraftverstärker (1) eine Primärbaugruppe (P) und eine kraftverstärkende Sekundärbaugruppe (S) aufweist, wobei die Primärbaugruppe (P) ein keilförmiges Primärelement (2) mit mindestens einem ersten Keil (27) und einem zweiten Keil (26) umfaßt und jeder Keil jeweils zwei angeordnete Keilflächen (26a, 26b, 27a, 27b) aufweist, und das Primärelement (2) - wie auch die Sekundärbaugruppe (S) - geradlinig bewegbar ist, wobei zwischen der Primärbaugruppe (P) und der Sekundärbaugruppe (S) mindestens ein erstes und ein zweites sich kontaktierendes walzenpaar (6, 7) angeordnet ist, **dadurch gekennzeichnet, dass** jeder Walze (6a, 6b, 7a, 7b) des mindestens einen ersten und zweiten Walzenpaares (6, 7) genau eine ständig kontaktierende Keilfläche (26a, 26b, 27a, 27b) zugeordnet ist.

2. Schraubstock nach Anspruch 1, **dadurch gekennzeichnet, daß** das Primärelement (2) als Doppelkeil mit einem ersten Keil (27) und einem direkt dahinter angeordnetem zweiten Keil (26) ausgebildet ist und/oder der erste Keil (27) des Primärelementes (2) mit einem ersten Primärkeilwinkel (α) von einer Keilfläche zur Symmetrieachse (5) zwischen etwa 10° bis 45°, bevorzugt zwischen etwa 15° bis 25°, besonders bevorzugt ca. 20°, ausgebildet ist und/oder der zweite Keil (26) des Primärelementes (2) mit einem zweiten Primärkeilwinkel (β) von einer Keilfläche zur Symmetrieachse (5) zwischen etwa 5° bis 35°, bevorzugt zwischen 10° bis 15°, besonders bevorzugt ca. 12°, ausgebildet ist.

3. Schraubstock nach einem oder beiden der vorhergehenden Ansprüche, **dadurch gekennzeichnet, daß** der erste Keil (27) am vorderen Ende des Primärelements (2) angeordnet ist und/oder dem ersten Keil (27) das erste Walzenpaar (7) und dem zweiten Keil (26) das zweite walzenpaar (6) zugeordnet ist und jede Keilfläche (26a, 26b, 27a, 27b) auf die zugehörige Walze (6a, 6b, 7a, 7b) wirkt und/oder im nicht aktiven Zustand des Kraftverstärkers das zweite, zur Primärbaugruppe (P) kontaktierende walzenpaar (6) sich im Eingriff des zweiten Keils (26) befindet und bei Bewegung des Primärelementes (2) in Richtung der Keilspitzen das erste walzenpaar (7) und das zweite Walzenpaar (6) an sich im Wesentlichen spiegelbildlich auftretenden gemeinsamen, fortbewegenden Kontaktpunkten (22) aufeinander abwälzbar sind.

4. Schraubstock nach einem oder mehreren der vorhergehenden Ansprüche, **dadurch gekennzeichnet, daß** das Verhältnis eines ersten Primärkeilwinkels (α) zwischen der Symmetrieachse (5) und einer Keilfläche des ersten Keils (27) zum zweiten Primärkeilwinkel (β) zwischen einer Symmetrieachse und einer Keilfläche des zweiten Keils (26) ungefähr 4:1 bis 4:3, bevorzugt ca. 2:1, besonders bevorzugt 3:2, beträgt und/oder das keilförmige Primärelement (2) zu einer Symmetrieebene, die auf der Symmetrieachse (5) liegt und zu der die zwei kontaktierenden Walzenpaare (6, 7) spiegelbildlich angeordnet sind, flächig ausgebildet ist oder daß das keilförmige Primärelement (2) rotationssymmetrisch ausgebildet ist und/oder der Profilübergang vom zweiten Keil (26) des Primärelementes (2) zum Keilprofil des ersten Keils (27) des keilförmigen Primärelementes (2) mit einem Radius ausgebildet ist, der im Wesentlichen dem Radius einer Walze (6a, 6b) des zweiten Walzenpaares (6) entspricht und bei Bewegung des Primärelements (2) in Richtung der Keilspitzen die Walzen (6a, 6b) an sich entgegen der Spitzenrichtung verändernden Kontaktpunkten (28) auf den Keilflächen (26a, 26b) des zweiten Keils (26) zumindest teilweise abwälzbar sind.

5. Schraubstock nach einem oder mehreren der vorhergehenden Ansprüche, **dadurch gekennzeichnet, daß** eine zur Sekundärbaugruppe gehörende Gegenlagerfläche (9), die von dem ersten Walzenlagerpaar (7) kontaktiert wird, mit einem Gegenlagerwinkel (δ) zwischen ca. 0° bis 20°, bevorzugt ca. 10°, einer Ebene senkrecht zur Symmetrieachse (5) nach außen symmetrisch zu einer Symmetrieebene ausgebildet ist, wobei sich insbesondere diese geneigte Gegenlagerfläche (9) jeweils ungefähr von der auf die Gegenlagerfläche (9) projezierten Rotationsachse (13a, 13b) der jeweiligen walze (7a, 7b) beginnend erstreckt, so daß sich eine - im Querschnitt gesehen - konkave Gegenlagerfläche (9) ergibt und/oder die Gegenlagerfläche (9) in sich eben ausgebildet ist und bei Bewegung des Primärelements (2) in Richtung der Keilspitzen die Walzen (7a, 7b) auf der Gegenlagerfläche (9) spiegelbildlich an sich verschiebenden Kontaktpunkten (24) abwälzbar sind und/oder die Gegenlagerfläche (9) gekrümmt, elliptisch, konvex oder als Kreisbogen beziehungsweise aus Abschnitten unterschiedlicher Ausgestaltung ausgebildet ist.

6. Schraubstock nach einem oder mehreren der vorhergehenden Ansprüche, **dadurch gekennzeichnet, daß** eine zur Primärbaugruppe (P) gehörende, zur Symmetrieachse (5) geneigte Widerlagerfläche (4a, 4b), die das zweite Walzenlagerpaar (6) kontaktiert, einen Widerlagerwinkel (τ) zum Lot der Symmetrieachse (5) zwischen ungefähr 15° bis 45°, bevorzugt ca. 30°, ausbildet und die Walzen (6a, 6b) bei Bewegung des Primärelements (2) in Richtung der Keilspitzen auf der Widerlagerfläche (4a, 4b) an spiegelbildlich auseinandergehenden Kontaktpunkten (20) abwälzbar sind und/oder die Widerlagerfläche gekrümmt, elliptisch, konvex oder als Kreisbogen beziehungsweise aus Abschnitten unterschiedlicher Ausgestaltung ausgebildet ist.

7. Schraubstock nach einem oder mehreren der vorhergehenden Ansprüche, **dadurch gekennzeichnet, daß** die Walzenlagerpaare (6, 7) jeweils gleiche beziehungsweise annähernd gleiche Durchmesser (D) aufweisen und/oder das Verhältnis zwischen Durchmesser (D) eines Walzenlagers und dem Radius (R) eines zylindrischen Widerlagers (3) der Primärbaugruppe (P) beziehungsweise Gegenlagers (8) der Sekundärbaugruppe (S) 2/3 bis 4/5, besonders bevorzugt ca. 3/4, ist.

8. Schraubstock nach einem oder mehreren der vorhergehenden Ansprüche, **dadurch gekennzeichnet, daß** eine Widerlagerfläche (4a) der Primärbaugruppe (P) - im Querschnitt gesehen - zwei gegensinnig gebogene Abschnitte aufweist und die zweite Widerlagerfläche (4b) zur Symmetrieachse (5) spiegelbildlich davon ausgebildet ist.

9. Schraubstock nach einem oder mehreren der vorhergehenden Ansprüche, **dadurch gekennzeichnet, daß** das erste, die Sekundärbaugruppe (S) kontaktierende Walzenlagerpaar (7) in einem Käfig geführt ist, insbesondere das zweite die Primärbaugruppe (P) kontaktierende Walzenlagerpaar (6) zumindest teilweise vom Käfig geführt ist und/oder zwei parallele seitliche Führungsbegrenzungen zur Führung und Lagerung der Walzenlagerpaare (6, 7), insbesondere in jeweils einer Linearführung gelagert, angeordnet sind und/oder die Walzenlagerpaare (6, 7) als Kugelpaare oder als Zylinderpaare ausgebildet sind.

10. Schraubstock nach einem oder mehreren der vorhergehenden Ansprüche, **dadurch gekennzeichnet, daß** die Keilflächen des ersten Keils (27) jeweils nach außen konvex, ellipsenförmig oder konkav gekrümmt sind, insbesondere auch die Keilflächen des zweiten Keils (26) des Primärelementes (2) nach außen konvex, ellipsenförmig oder konkav gekrümmt sind und/oder die Keilflächen eines oder beider Keile (27, 26) eben sind und/oder die Keilfläche aus unterschiedlich geneigten, gekrümmten oder ausgerichteten Teilflächen besteht und/oder die Keilflächen jeweils paarweise symmetrisch am Primärelement angeordnet sind.

## Claims

1. Vise with power amplifier (1), wherein the power amplifier (1) has a primary structural component (P) and a power-amplifying secondary structural component (S), wherein the primary structural component (P) comprises a wedge-like primary element (2) with at least one first wedge (27) and one second wedge (26), and each wedge has at least two arranged wedge surfaces (26a, 26b, 27a, 27b), and the primary element (2) - as well as also the secondary structural component (S) - can move linearly, wherein between the primary structural component (P) and the secondary structural component (S) at least one first and one second pair of rollers (6, 7) contacting each other is arranged, **characterized in that** each roller (6a, 6b, 7a, 7b) of the at least one first and one second pair of rollers (6, 7) is allocated exactly one permanently contacting wedge surface (26a, 26b, 27a, 27b).

2. Vise according to claim 1, **characterized in that** the primary element (2) is designed as double wedge with a first wedge (27) and a second wedge (26) arranged directly behind it and/or the first wedge (27) of the primary element (2) is designed with a first primary wedge angle (α) from a wedge surface to the axis of symmetry (5) between about 10° to 45°, preferably between about 15° to 25°, particularly preferred about 20°, and/or the second wedge (26) of the primary element (2) is designed with a second primary wedge angle (β) from a wedge surface to the axis of symmetry (5) between about 5° and 35°, preferably between 10° to 15°, particularly preferred about 12°.

3. Vise according to one or both of the preceding claims, **characterized in that** the first wedge (27) is arranged on the front end of the primary element (2), and/or the first pair of rollers (7) is allocated the first wedge (27) and the second pair of rollers (6) is allocated the second wedge (26), and each wedge surface (26a, 26b, 27a, 27b) acts on the corresponding roller (6a, 6b, 7a, 7b), and/or in non-active condition of the power amplifier the second pair of rollers (6) contacting to the primary structural component (P) is in engagement with the second wedge (26), and, when the primary element (2) moves in the direction of the tips of the wedges, the first pair of rollers (7) and the second pair of rollers (6) can roll off on each other on common, moving contact points (22) which occur essentially mirror-inverted.

4. Vise according to one or more of the preceding claims, **characterized in that** the ratio of a first primary wedge angle (α) between the axis of symmetry (5) and a wedge surface of the first wedge (27) to the second primary wedge angle (β) between an axis of symmetry and a wedge surface of the second wedge (26) is about 4:1 to 4:3, preferably about 2:1, in particular preferred 3:2, and/or the wedge-shaped primary element (2) is designed plane to a plane of symmetry which lays on the axis of symmetry (5) and to which the two contacting pairs of rollers (6, 7) are arranged mirror-inverted, or that the wedge-shaped primary element (2) is designed rotationally symmetrical, and/or the profile transition from the second wedge (26) of the primary element (2) to the wedge profile of the first wedge (27) of the wedge-shaped primary element (2) is designed with a radius corresponding essentially with the radius of a roller (6a, 6b) of the second pair of rollers (6), and, when the primary element (2) moves in the direction of the tips of the wedges, the rollers (6a, 6b) can roll off on contact points (28) changing in opposite the direction of the tips on the wedge surfaces (26a, 26b) of the second wedge (26) at least partly.

5. Vice according to one or more of the preceding claims, **characterized in that** a counter bearing surface (9) which is part of the secondary structural component and which is contacted by the first pair of roller bearings (7) is developed with a counter bearing angle (δ) between about 0° up to 20°, preferably about 10°, in a plane vertically to the axis of symmetry (5) outwards symmetrically to a plane of symmetry, wherein in particular this tilted counter bearing surface (9) extends each time starting about at the rotational axis (13a, 13b) of the respective roller (7a, 7b) projected on the rotational axis (13a, 13b) so that - seen in cross section - concave counter bearing surface (9) results, and/or the counter bearing surface (9) is designed itself plane and, when the primary element (2) moves in the direction of the tips of the wedges, the rollers (7a, 7b) can be rolled off on the counter bearing surface (9) mirror-inverted on shifting contact points (24), and/or the counter bearing surface (9) is either bent, elliptic, convex or designed as circular arc or of sections of different design.

6. Vise according to one or more of the preceding claims, **characterized in that** a counter bearing surface (4a, 4b) which is part of the primary structural component (P), tilted toward the axis of symmetry (5) which contacts the second pair of rollers (6) forms a counter bearing angle (t) from the vertical of the axis of symmetry (5) between about 15° to 45°, preferably about 30°, and the rollers (6a, 6b) can be rolled off, when the primary element (2) moves in the direction of the tips of the wedges, on the counter bearing surface (4a, 4b) on mirror-inverted separating contact points (20), and/or the counter bearing surface is either bent, elliptic, convex or designed as circular arc or of sections with different design.

7. Vice according to one or more of the preceding claims, **characterized in that** the pairs of roller bearings (6, 7) each have identical or almost identical diameters (D), and/or the ratio between diameter (D) of a roller bearing and the radius (R) of a cylindrical counter bearing (3) of the primary structural component (P) or counter bearing (8) of the secondary structural component (S) is 2/3, 4/5, in particular preferred about 3/4.

8. Vice according to one or more of the preceding claims, **characterized in that** a counter bearing surface (4a) of the primary structural component (P) - seen in cross section - has two sections bent in opposite direction, and the second counter bearing surface (4b) is designed to the axis of symmetry (5) mirror-inverted to it.

9. Vise according to one or more of the preceding claims, **characterized in that** the first pair of roller bearings (7) contacting the secondary structural component (S) is guided in a cage, in particular the second pair of roller bearings (6) contacting the primary structural component (P) is guided at least partly by the cage, and/or two parallel lateral guide restrictions are arranged for guiding and bearing the pairs of roller bearings (6, 7), supported in particular each time in a linear guide, and/or the pairs of roller bearings (6, 7) are designed as pairs of balls or cylinders.

10. Vise according to one or more of the preceding claims, **characterized in that** the wedge surfaces of the first wedge (27) each are outwards bent convexly, elliptically or concavely, in particular also the wedge surfaces of the second wedge (26) of the primary element (2) are bent outwards convexly, elliptically or concavely, and/or the wedge surfaces of one or both wedges (27, 26) are plane, and/or the wedge surface consists of differently tilted, bent or orientated partial surfaces, and/or the wedge surfaces each are arranged symmetrically in pairs on the primary element.

## Revendications

1. Etau comportant un amplificateur de force (1) comprenant un ensemble de construction primaire (P) et un ensemble de construction secondaire (S) amplifiant la force, l'ensemble de construction primaire (P) comportant un élément primaire (2) à coins comprenant au moins un premier coin (27) et un deuxième coin (26), chacun des coins comportant au moins deux faces inclinées (26a, 26b, 27a, 27b), l'élément primaire (2) ainsi que l'ensemble de construction secondaire (S) pouvant être déplacés de façon rectiligne et, comprenant au moins une première et une deuxième paire de rouleaux (6, 7) chacun en contact avec l'autre, les deux étant situés entre les deux ensembles de construction primaire (P) et secondaire (S), cet étauà étant **caractérisé en ce qu'**à chacun des rouleaux (6a, 6b, 7a, 7b) appartenant à au moins une première ou à une deuxième paire de rouleaux (6, 7) correspond une seule face inclinée (26a, 26b, 27a, 27b) en contact constant avec les rouleaux correspondants.

2. Etau selon la revendication 1, **caractérisé en ce que** l'élément primaire (2) comporte un double coin dont un premier (2) est situé juste devant un deuxième (26) et/ou en ce que l'élément primaire comporte un premier coin (27) suivi d'un deuxième coin (26) et/ou **en ce que** le premier coin (27) de l'élément primaire (2) comporte une face inclinée formant un premier angle (α) avec l'axe de symétrie (5) compris entre 10° et 45°, de préférence entre 15° et 25° et en particulier de 20° et/ou **en ce que** le deuxième coin (26) de l'élément primaire (2) comporte une face inclinée formant un deuxième angle (β) avec l'axe de symétrie (5) compris entre 5° et 35°, de préférence entre 10° et 15° et en particulier de 12°.

3. Etau selon l'une ou les deux revendications précédentes, **caractérisé en ce que** le premier coin (27) est situé au niveau de l'extrémité avant de l'élément primaire (2) et/ou **en ce que** la première paire de rouleaux (7) correspond au premier coin (27) et la deuxième paire de rouleaux (6) correspond au deuxième coin (26) dont chacune des faces inclinées (26a, 26b, 27a, 27b) agissent sur le rouleau correspondant (6a, 6b, 7a, 7b) et/ou **en ce qu'**à l'état inactif de l'amplificateur de force, la deuxième paire de rouleaux (6) en contact avec l'ensemble de construction primaire (P) est située au niveau de la pointe du deuxième coin (26) et lors du mouvement de l'élément primaire (2) vers la position de la pointe du premier coin, la première paire de rouleaux (7) roule sur la deuxième paire de rouleaux (6) au niveau de points de contact (22) qui se déplacent de façon symétrique.

4. Etau selon une ou plusieurs des revendications précédentes, **caractérisé en ce que** le rapport entre le premier angle (α) formé par la face inclinée du premier coin (27) et l'axe de symétrie (5) et le deuxième angle (β) formé par la face inclinée du deuxième coin (26) et l'axe de symétrie (5) est compris entre 4:1 et 4:3, de préférence autour de 2:1 et en particulier de 3:2 et/ou en ce que l'élément primaire en forme de coin (2) est situé au niveau de l'axe de symétrie (5) de façon symétrique entre les deux paires de rouleaux (6, 7) en contact, possède une forme suivant le plan de symétrie ou une forme ronde suivant une symétrie rotationnelle et/ou en ce que la section de l'élément primaire (2) entre le premier coin (27) et le deuxième coin (26) est arrondie selon un rayon de courbure correspondant approximativement au rayon d'un rouleau (6a, 6b) de la deuxième paire de rouleaux (6) de façon à ce qu'un mouvement de l'élément primaire (2) en direction des pointes des coins provoque un roulement au moins partiel des rouleaux (6a, 6b) au niveau des points de contact (28) qui se déplacent en sens contraire sur les faces inclinées (26a, 26b) du deuxième coin (26).

5. Etau selon une ou plusieurs des revendications précédentes, **caractérisé en ce qu'**une surface (9) d'un contre palier appartenant à l'ensemble de construction secondaire (S) en contact avec la première paire de roulements à rouleaux (7) est créée en formant un angle (δ) avec un plan perpendiculaire à l'axe de symétrie (5) compris entre 0° et 20° et de préférence autour de 10° de façon à ce que cette surface inclinée (9) du contre palier soit située dans la zone de projection de l'axe de rotation (13a, 13b) des rouleaux correspondant (7a, 7b) sur cette surface (9) du contre palier permettant d'utiliser une surface (9) de forme concave et/ou **en ce que** la surface (9) du contre palier est plane de façon à ce que, lors du mouvement de l'élément primaire (2) en direction des pointes des coins, les rouleaux (7a, 7b) se déplacent sur la surface (9) du contre palier en roulant sur des points de contacts (24) qui se déplacent ainsi sur la surface (9) de façon symétrique et/ou **en ce que** la surface (9) du contre palier est courbée, de forme elliptique, convexe, circulaire ou formée par plusieurs courbures différentes.

6. Etau selon une ou plusieurs des revendications précédentes, **caractérisé en ce qu'**une surface (4a, 4b) d'un contre palier appartenant à l'ensemble de construction primaire (P) en contact avec la deuxième paire de roulements à rouleaux (6) forme un angle (τ) avec la perpendiculaire à l'axe de symétrie (5) compris entre 15° et 45° et de préférence autour de 30° de façon à ce que, lors du mouvement de l'élément primaire (2) en direction des pointes des coins, les rouleaux (6a, 6b) se déplacent sur la surface (4a, 4b) du contre palier en roulant sur des points de contacts (20) qui se déplacent alors en s'éloignant l'un de l'autre de façon symétrique et/ou **en ce que** la surface du contre palier est courbée, de forme elliptique, convexe, circulaire ou formée par plusieurs courbures différentes.

7. Etau selon une ou plusieurs des revendications précédentes, **caractérisé en ce que** les paires de roulements à rouleaux (6, 7) possèdent des diamètres (D) identiques ou similaires et/ou **en ce que** le rapport entre le diamètre (D) d'un roulement à rouleaux et le rayon (R) d'un contre palier cylindrique (3) de l'ensemble de construction primaire (P) ou d'un contre palier (8) de l'ensemble de construction secondaire (S) est compris entre 2/3 et 4/5 et de préférence autour de 3/4.

8. Etau selon une ou plusieurs des revendications précédentes, **caractérisé en ce qu'**une surface (4a) du contre palier de l'ensemble de construction primaire (P) possède deux sections courbées en sens opposé et **en ce que** la deuxième surface (4b) du contre palier possède une section symétrique par rapport à l'axe de symétrie (5).

9. Etau selon une ou plusieurs des revendications précédentes, **caractérisé en ce que** la première paire de rouleaux (7) en contact avec l'ensemble de construction secondaire (S) est guidée à l'intérieur d'une cage et **en ce qu'**en particulier la deuxième paire de roulements à rouleaux (6) en contact avec l'ensemble de construction primaire (P) est au moins partiellement guidée par la cage et/ou **en ce qu'**il existe deux limites au déplacement latéral permettant de guider et de maintenir en particulier par un guidage linéaire les paires de roulements à rouleaux (6, 7) et/ou **en ce que** les paires de roulements à rouleaux (6, 7) sont des paires de roulement à billes ou à cylindres.

10. Etau selon une ou plusieurs des revendications précédentes, **caractérisé en ce que** les faces inclinées du premier coin (27) et en particulier les faces inclinées du deuxième colin (26) de l'élément primaire (2) sont courbées vers l'extérieur de façon convexe, elliptique ou concave et/ou **en ce que** les faces inclinées d'un des deux coins (27, 26) ou des deux coins sont planes et/ou **en ce que** les faces inclinées forment par symétrie des paires au niveau de l'élément primaire.
